# EUROPÄISCHE PATENTSCHRIFT

(11) **EP 0 427 083 B1**
(45) Veröffentlichungstag und Bekanntmachung des Hinweises auf die Patenterteilung: **23.03.1994**
(21) Anmeldenummer: 90120750.6
(22) Anmeldetag: 30.10.1990
(51) Int. Cl.: B21C 23/21

(54) **Liegende Metallstrangpresse**
Horizontal metal-extrusion press
Presse d'extrusion de métaux horizontale

(30) Priorität: 09.11.1989 DE 3937276
(43) Veröffentlichungstag der Anmeldung: 15.05.1991
(73) Patentinhaber: SMS Hasenclever GmbH, D-40035 Düsseldorf (DE)
(72) Erfinder: Groos, Horst, W-4020 Mettmann 2 (DE)
(74) Vertreter: Pollmeier, Felix, Dipl.-Ing.

(56) Entgegenhaltungen:
- DE-A- 2 160 407
- DE-B- 1 131 174
- DE-B- 1 627 837
- DE-C- 1 028 963
- DE-C- 2 913 174
- GB-A- 1 121 841
- US-A- 2 714 522
- US-A- 3 083 827
- US-A- 3 334 507

## Beschreibung

Metallstrangpressen werden bevorzugt liegend angeordnet um den Abtransport der stranggepressten Profile, die oft sehr biegeempfindlich sind, einfach halten zu können. Durch die fertigungs- insbesondere gießtechnischen Möglichkeiten bei der Herstellung der Preßzylinder ist die Preßkraft der Einzylinderpressen begrenzt. Es sind nur ausgewählte Gießereien in der Lage Gußstücke außergewöhnlicher Größe herzustellen und die Kosten der Herstellung wachsen mit dem Risiko und den Maßnahmen zur Vermeidung von Fehlgüssen überproportional. Auch ist die Dauerhaltbarkeit großer Zylinder infolge unterschiedlicher Dehnung und Beanspruchung von Zylindermantel und Zylinderboden mit im Übergangsbereich auftretenden Spannungsspitzen nicht immer befriedigend. Um diesen Nachteilen zu entgehen ist es bekannt Zylinder zweigeteilt auszuführen und aus einem Mantel und einem Boden zusammenzusetzen, wie dies beispielsweise aus der DE-C-1 231 559 oder der US-A-2 075 968 bekannt ist. Der Boden des Zylinders solcher Pressen bildet einen mit einer Dichtung zum Mantel und mit einem Flansch versehenen Stopfen. Aus der DE-C-1 627 837 ist eine liegende Metallstrangpresse bekannt, die in Ausführungsbeispielen auch zweigeteilte Zylinder ausweist, bei denen Zylinderboden und Zylindermantel durch Schraubenbolzen axial gegeneinander verspannt sind. Diese Verspannung kann nicht ausschließen, daß sich bei der Aufweitung des Zylindermantels unter dem Betriebsdruck und dem dadurch entstehenden Spiel des Zylindermantels gegenüber dem Stopfen des Zylinderbodens der Zylindermantel unter seinem Eigengewicht ausmittig zum Zylinderboden und damit zur Pressenachse versetzt, was für den Verschleiß der Bauteile der Strangpresse ebensowenig wie für den Strangpreßvorgang akzeptabel ist und das Verpressen maßhaltiger Hohlprofile unmöglich macht. Daher werden liegende Metallstrangpressen bei Überschreitung der in einem einteiligen Zylinder beherrschbaren Preßkraft als Mehrzylinderpressen unter Inkaufnahme des höheren baulichen Aufwands und höherer Kosten ausgeführt.

Ausgehend von dem Stand der Technik nach der DE-C-1 627 837 ist es Aufgabe der Erfindung, die Verwendung eines geteilten Zylinders an einer liegenden Metallstrangpresse dadurch zu ermöglichen, daß ein ausmittiger Versatz des Zylindermantels zum mit dem Zylinderholm zentrisch verbundenen Zylinderboden ausgeschlossen wird, was erfindungsgemäß dadurch erreicht wird, daß in einer Metallstrangpresse gemäß dem Oberbegriff des Anspruchs 1 der Flansch zum Zylinderboden und die ihm zugekehrte Mantelstirnfläche mit mindestens drei radialen Nuten und in diese eingesetzte, den Zylindermantel zum Zylinderboden zentrierende Paßfedern versehen sind.

Die Atmung des gegenüber dem Zylinderboden verspannten und erfindungsgemäß zentrierten Zylindermantels ist möglich, wenn die Verspannung in Grenzen gehalten werden kann, die bei einem Verhältnis des Zylinderdurchmessers zum Kolbenhub von etwa 1:1 liegt, also bei kurzhubigen Pressen. Bei längerhubigen Pressen empfiehlt es sich, gemäß einem weiteren Merkmal der Erfindung das dem Zylinderboden abgewandte Ende des Zylindermantels mit einer dieses zentrierenden Stütze zu versehen, wozu das dem Zylinderboden abgekehrte Ende des Zylindermantels mit einer Stütze zum Pressenrahmen versehen ist, welche mit zwei, drei oder vier radial gerichteten Nuten und Federn das dem Boden abgekehrte Ende des Zylindermantels ebenfalls zentrisch zur Pressenachse hält.

Um eine Schwächung des Zylindermantels an der dem Boden abgekehrten Seite durch Nuten zu vermeiden, wird gemäß einem weiteren Merkmal der Erfindung auf das dem Boden abgekehrte Ende des Mantels ein Ring aufgeschrumpft oder aufgespannt, in den die Nuten eingearbeitet sind, die zur Aufnahme der Federn vorgesehen sind, über die der Mantel abgestützt und zentrisch zur Pressenachse gehalten ist.

Zur Stützung des Zylindermantels können auf mindestens den zwei unteren Ankern des Pressenrahmens befestigte Schuhe dienen, die mit korrespondierenden Nuten zu den Nuten im Mantel bzw. dem den Mantel umgebenden Ring versehen sind. Anstelle einzelner Schuhe kann auch eine U-förmige, nach oben offene Stütze vorgesehen sein, die mit den korrespondierenden Nuten zu den Nuten im Mantel oder dem den Mantel umgebenden Ring versehen ist.

Die Zeichnungen zeigen Ausführungsbeispiele der Erfindung. Es ist in
- Figur 1: die Gesamtansicht (Vorderansicht) einer liegenden Metallstrangpresse dargestellt, zu der in größerem Maßstab die

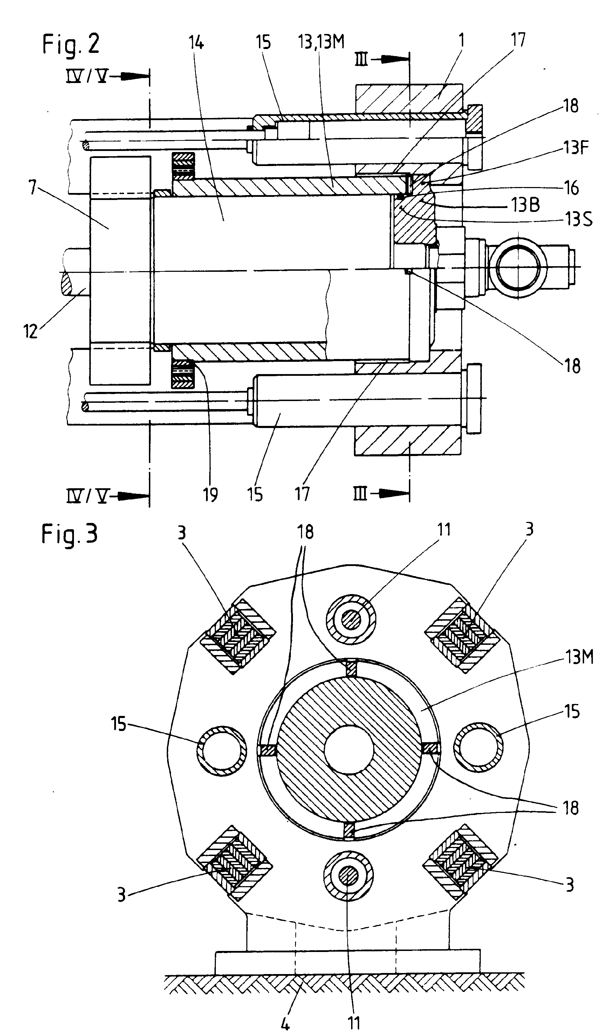

- Figur 2: einen Ausschnitt einer teilweise nach der in Fig. 1 eingetragenen Linie II-II geschnittenen Aufsicht, die
- Figur 3: einen Schnitt nach der in Fig. 2 eingetragenen Linie III-III und die
- Figur 4: einen Schnitt nach der in Fig. 2 eingetragenen Linie IV-IV zeigt, während die
- Figur 5: eine Abwandlung des Ausführungsbeispiels in einer der Fig. 4 entsprechenden Darstellung eines Schnittes nach der in Fig. 2 eingetragenen Linie V-V zeigt.

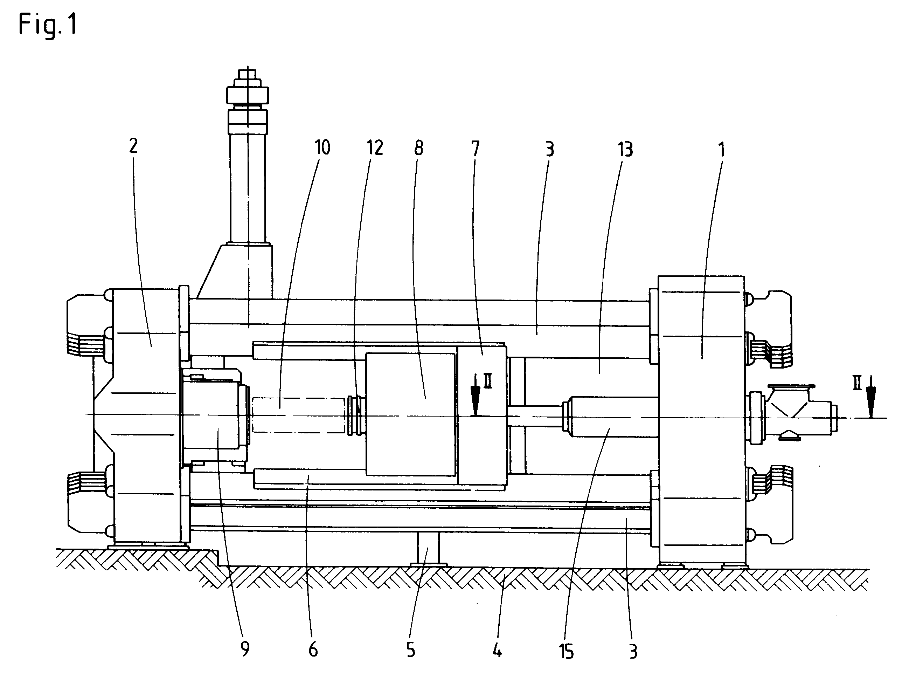

Die in Figur 1 in der Gesamtansicht dargestellte liegende Strangpresse besteht aus einem Zylinderholm 1 einem Gegenholm 2 und diese zu einem Rahmen verbindenden vier Ankern 3, wobei der Zylinderholm 1 mit dem Fundament 4 verbunden ist und der Gegenholm 2 auf dem Fundament abgestützt ist und zwei weitere Stützen 5 die unten liegenden Anker 3 abstützen, die mit Gleitbahnen 6 versehen sind auf denen ein Laufholm 7 und ein Aufnehmerhalter 8 verschiebbar angeordnet sind. Mit 9 ist ein Matrizenhalter bezeichnet. Nach dem Laden eines Blockes 10 wird der Aufnehmerhalter 8 bis zur Anlage an dem Matrizenhalter 9 mittels hierfür vorgesehener Kolben- Zylinder- Einheit 11 verschoben und in Anlage am Matrizenhalter 9 gehalten. Das Auspressen eines Stranges durch die Matrize im Matrizenhalter 9 erfolgt mittels eines Preßstempels 12, der am Laufholm 7 befestigt ist und in den vom Aufnehmerhalter 8 getragenen Blockaufnehmer eindringt. Die Preßkraft wird von einem in einem Zylinder 13 geführten und beaufschlagten Kolben 14 aufgebracht, während zum Rückzug des Preßstempels 12 Kolben- Zylinder- Einheiten 15 vorgesehen sind, wobei der Hauptkolben 14 wie die Kolben der Kolben- Zylinder-Einheiten 15 mit dem Laufholm 7 verbunden sind.

Der Zylinder 13 ist zweigeteilt und zusammengesetzt aus einem Zylindermantel 13 M und einem Zylinderboden 13 B, wobei der Zylinderboden 13 B einen Stopfen 13 S zum Zylindermantel 13 M bildet und mit einem Flansch 13 F versehen ist. Ferner ist eine Dichtung 16 zwischen dem Stopfen 13 S und dem Zylindermantel 13 M vorgesehen. Der Zylinder 13 ist eingesetzt in den Zylinderholm 1, der hierzu mit einer Bohrung 17 versehen ist, die zur Zentrierung des Flansches 13 F zu einem Paßsitz verengt ist. Die dem Zylinderboden 13 B zugekehrte Stirnfläche des Zylindermantels 13 M und korrespondierend der Flansch 13 F des Zylinderbodens 13 B sind mit mindestens drei im Ausführungsbeispiel vier radialen Nuten versehen, in die Federn 18 eingelegt sind, so daß unabhängig von der Dehnung, die der Zylindermantel 13 M unter dem Betriebsdruck erfährt, eine genaue Zentrierung des Zylindermantels 13 M zum Zylinderboden 13 B und damit zum Zylinderholm 1 besteht. Die axiale Verbindung des Zylindermantels 13 M mit dem Zylinderholm 1 kann in verschiedener, geeigneter Weise erfolgen, beispielsweise durch Schrauben die von der Stirnfläche des Zylindermantels 13 M in diesen eingesetzt sind. Auch kann der Zylindermantel 13 M mit über seinen Außendurchmesser hervorragenden Vorsprüngen versehen sein, über die Halterungen am Zylinderholm 1 greifen oder die mit Ausnehmungen in der Bohrung 17 des Zylinderholms 1 in der Art eines Bajonettverschlusses zusammenwirken.

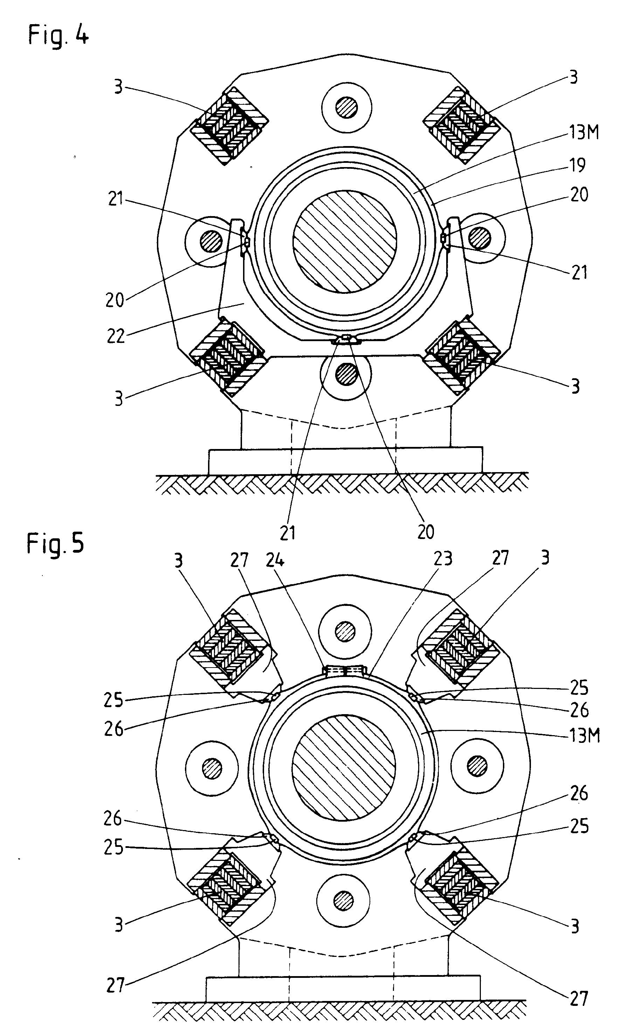

An einem dem Zylinderboden 13 B abekehrten Ende ist der Zylindermantel 13 M im Pressenrahmen abgestützt und zentriert. Wie die Figur 4 zeigt, ist hierzu auf das Ende des Zylindermantels 13 M ein Ring 19 aufgeschrumpft. Dieser Ring 19 ist mit Nuten zur Aufnahme von Federn 20 versehen, die zugleich in korrespondierende Nuten von Paßstücken 21 greifen, die von einer U-förmigen nach oben offenen Stütze 22 gehalten sind, wobei die Stütze 22 auf den unteren Ankern 3 des Pressenrahmens sitzt.

Eine abgewandelte Ausführung zur Figur 4 zeigt die Figur 5. Das dem Zylinderboden 13 M abgekehte Ende des Zylindermantels 13 M ist hier mit einem Klemmring 23 versehen, der mittels der Klemmschraube 24 auf dem Ende des Zylindermantels 13 M festgeklemmt ist. Der ring 23 ist mit Nuten zur Aufnahme von Federn 25 versehen, die zugleich in korrespondierende Nuten von Paßstücken 26 greifen, die in Schuhen 27 sitzen, welche jeweils an einem Anker 3 des Pressenrahmens befestigt sind.

## Patentansprüche

1. Liegende Metallstrangpresse, bestehend aus einem Zylinderholm (1), einem die Preßmatrize stützenden Gegenholm (2), die Holme (1, 2) zu einem Rahmen verbindenden Ankern (3) und im Rahmen geführt, einem axial verschiebbaren Aufnehmerhalter (8) sowie einem von einem Preßkolben als Hauptkolben (14) verschiebbaren, den Preßstempel (12) tragenden Laufholm (7), wobei der Preßkolben (14) in einem zweigeteilten aus einem Mantel (13M) und einem Boden (13B) zusammengesetzten Zylinder (13) geführt ist, und wobei der Boden (13B) zentrisch mit dem Zylinderholm (1) verbunden ist und einen in den Mantel (13M) eingesetzten, mit einer Dichtung (16) zum Mantel (13M) und einem Flansch (13F) versehenen Stopfen (13S) bildet,
**dadurch gekennzeichnet,**
daß der Flansch (13F) und die ihm zugekehrte Stirnfläche des Mantels (13M) mit mindestens drei radialen Nuten und in diese eingesetzte, den Mantel (13M) zum Boden (13B) zentrierenden Paßfedern (18) versehen ist.

2. Liegende Metallstrangpresse nach Anspruch 1,
dadurch gekennzeichnet,
daß das dem Zylinderboden (13B) abgekehrte Ende des Zylindermantels (13M) mit Stützen (22,27) zum Pressenrahmen versehen ist, welche über zwei, drei oder vier radial gerichtete Nuten und Federn (20,25) das dem Boden (13B) abgekehrte Ende des Mantels (13M) zentrisch zur Pressenachse halten.

3. Liegende Metallstrangpressen nach Anspruch 2,
dadurch gekennzeichnet,
daß das dem Boden (13B) abgekehrte Ende des Mantels (13M) mit einem aufgeschrumpften oder aufgespannten Ring (19,23) umgeben ist, in den die die Federn (20,25) aufnehmenden Nuten eingearbeitet sind.

4. Liegende Metallstrangpressen nach Anspruch 2 oder 3,
dadurch gekennzeichnet,
daß als Stützen auf mindestens den unteren zwei Ankern (3) befestigte Schuhe (27) vorgesehen sind, die mit den korrespondierenden Nuten zu den im Mantel (13M) oder dem den Mantel (13M) umgebenden Ring (23) angeordneten Nuten versehen sind.

5. Liegende Metallstrangpresse nach Anspruch 2 oder 3,
dadurch gekennzeichnet,
daß die unteren zwei Anker (3) mit einer U-förmigen, nach oben offenen Stütze (22) versehen sind, die mit den korrespondierenden Nuten zu den im Mantel (13M) oder dem den Mantel (13M) umgebenden Ring (19) angeordneten Nuten versehen ist.

## Claims

1. A horizontal metal extrusion press, comprising a cylinder crosshead (1), a counter crosshead (2) supporting the press die, tie rods (3) connecting the crossheads (1, 2) to form a frame and guided in the frame, an axially displaceable receiver container (8) and a travelling crosshead (7) displaceable by a press piston as the main piston (14) and carrying the press die (12), wherein the press piston (14) is guided in a cylinder (13) in two parts and comprising a jacket (13M) and a base (13B), and wherein the base (13B) is connected centrally to the cylinder crosshead (1) and forms a plug (13S) inserted in the jacket (13M) and provided with a seal (16) with respect to the jacket (13M) and with a flange, **characterized in that** the flange (13F) and the end face of the jacket (13M) facing it [are] provided with at least three radial grooves and feather keys (18) inserted therein and centring the jacket (13M) with respect to the base (13B).

2. A horizontal metal extrusion press according to Claim 1, **characterized in** **that** the end of the cylinder jacket (13M) remote from the cylinder base (13B) is provided with supports (22, 27) to the press frame, which by way of two, three or four radially orientated grooves and keys (20, 25) hold the end of the jacket (13M) remote from the base (13B) centrally with respect to the press axis.

3. Horizontal metal extrusion presses according to Claim 2, **characterized in** **that** the end of the jacket (13M) remote from the base (13B) is surrounded by a ring (19, 23), which is shrunk or clamped on and in which grooves receiving the keys (20, 25) are formed.

4. Horizontal metal extrusion presses according to Claim 2 or 3, **characterized in that** shoes (27), which are secured to at least the two lower tie rods (3) and which are provided with the grooves corresponding to the grooves formed in the jacket (13M) or the ring (23) surrounding the jacket (13M), are provided as supports.

5. A horizontal metal extrusion press according to Claim 2 or 3, **characterized in that** the lower two tie rods (3) are provided with a U-shaped support (22) open at the top, which is provided with the grooves corresponding to the grooves formed in the jacket (13M) or the ring (19) surrounding the jacket (13M).

## Revendications

1. Extrudeuse à métaux horizontale, comprenant un cadre à cylindre (1), un contre-cadre (2) qui supporte la matrice de presse, des tirants (3) qui relient les cadres (1, 2) en un châssis, et un récepteur (8) guidé dans le châssis et mobile axialement, ainsi qu'un cadre mobile (7) qui peut être déplacé par un piston de presse en tant que piston principal (14) et qui porte le poinçon de presse (12), le piston de presse (14) étant guidé dans un cylindre (13) en deux parties composé d'un manteau (13 M) et d'un fond (13 B), et le fond (13 B) étant relié de façon centrée au cadre de cylindre (1) et formant un obturateur (13 S) mis en place dans le manteau (13 M) avec une étanchéité (16) par rapport au manteau (13 M) et comprenant une bride (13 F), caractérisée en ce que la bride (13F) et la face d'extrémité du manteau (13M) qui lui fait face sont pourvues d'au moins trois gorges radiales et de ressorts ajustés (18) introduits dans lesdites gorges et qui centrent le manteau (13M) vis-à-vis du fond (13B).

2. Extrudeuse à métaux horizontale selon la revendication 1, caractérisée en ce que l'extrémité du manteau de cylindre (13M) détournée du fond de cylindre (13B) est pourvue de supports (22, 27) vis-à-vis du châssis de presse, lesdits supports maintenant l'extrémité du manteau (13M) détournée du fond (13B) de manière centrée vis-à-vis de l'axe de la presse au moyen de deux, trois ou quatre gorges et ressorts (20, 25) dirigés radialement.

3. Extrudeuse à métaux horizontale selon la revendication 2, caractérisée en ce que l'extrémité du manteau (13M) détournée du fond (13B) est entourée d'une bague (19, 23) frettée ou coiffée sous tension, dans laquelle sont ménagées les gorges qui reçoivent les ressorts (20, 25).

4. Extrudeuse à métaux horizontale selon l'une ou l'autre des revendications 2 et 3, caractérisée en ce qu'il est prévu en tant que supports des sabots (27) fixés sur au moins les deux tirants inférieurs (3), sabots dans lesquels sont ménagées les gorges qui correspondent aux gorges prévues dans le manteau (13M) ou dans la bague (23) qui entoure le manteau (13M).

5. Extrudeuse à métaux horizontale selon l'une ou l'autre des revendications 2 et 3, caractérisée en ce que les deux tirants inférieurs (3) sont pourvus d'un support (22) en forme de U ouvert vers le haut, dans lequel sont ménagées les gorges qui correspondent aux gorges prévues dans le manteau (13M) ou dans la bague (19) qui entoure le manteau (13M).
